Europäisches Patentamt

European Patent Office

Office européen des brevets

(19)

(11) Veröffentlichungsnummer: **0 006 657**
B1

# (12) EUROPÄISCHE PATENTSCHRIFT

(45) Veröffentlichungstag der Patentschrift:
16.09.81

(21) Anmeldenummer: **79200314.7**

(22) Anmeldetag: **18.06.79**

(51) Int. Cl.³: **B 60 T 8/18**

(54) **Vorrichtung zur Steuerung einer Druckluftbremse in Abhängigkeit der Fahrzeugbelastung.**

(30) Priorität: **27.06.78 CH 6989/78**

(43) Veröffentlichungstag der Anmeldung:
**09.01.80 Patentblatt 80/1**

(45) Bekanntmachung des Hinweises auf die Patenterteilung:
**16.09.81 Patentblatt 81/37**

(84) Benannte Vertragsstaaten:
**AT BE CH DE FR GB IT NL SE**

(56) Entgegenhaltungen:
**CH-A- 559 647**
**CH-A- 567 954**
**DE-B-1 201 392**

(73) Patentinhaber: **Werkzeugmaschinenfabrik Oerlikon-Bührle AG, Birchstrasse 155, CH-8050 Zürich (CH)**

(72) Erfinder: **Deutsch, Heinz, Kreuzwiesenstrasse 17, CH-8051 Zürich (CH)**
Erfinder: **Walser, Urs, Käshaldenstrasse 39, CH-8052 Zürich (CH)**

## Vorrichtung zur Steuerung einer Druckluftbremse in Abhängigkeit der Fahrzeugbelastung

Die Erfindung betrifft eine Vorrichtung zur Steuerung einer Druckluftbremse in Abhängigkeit der Fahrzeugbelastung an einem Fahrzeug, mit einem zwischen zwei Fahrzeugteilen, nämlich einem Fahrzeugkasten und einem Fahrgestell angeordneten Wiegeventil, das über eine erste kugelförmige Stützfläche an einem der beiden Fahrzeugteile abgestützt ist.

Bei einer bekannten Vorrichtung dieser Art (CH-PS 567 954) ist das Wiegeventil am Fahrzeugkasten befestigt und stützt sich über eine kugelförmige Stützfläche an einer mit dem Fahrgestell verbundenen Fahrzeugfeder ab. Da der Fahrzeugkasten und das Fahrgestell mit gewissem Spiel miteinander zusammengebaut sind, entstehen während der Fahrt Querkräfte, die sich ungünstig an dem fest an einem der beiden Fahrzeugteile befestigten Wiegeventil auswirken. Die durch die Querkräfte an der Stützfläche des Wiegeventils entstehenden Reibungskräfte beeinträchtigen nämlich wesentlich die Genauigkeit der Steuerung der Druckluftbremse.

Die Erfindung, wie sie in der Kennzeichnung des Patentanspruchs 1 umschrieben ist, löst die Aufgabe, eine Vorrichtung zur lastabhängigen Steuerung einer Druckluftbremse zu schaffen, bei welcher die negative Wirkung der Querkräfte auf das Wiegeventil vermieden und somit die Genauigkeit der Steuerung erhöht wird.

Ein Ausführungsbeispiel der erfindungsgemässen Vorrichtung wird im folgenden anhand der beigefügten Zeichnung näher beschrieben. Es zeigen:

Fig. 1 eine schematische Darstellung einer Vorrichtung zur lastabhängigen Steuerung in Ansicht;

Fig. 2 eine Seitenansicht der in Fig. 1 dargestellten Vorrichtung;

Fig. 3 eine Einzelheit von Fig. 1 teilweise im Schnitt.

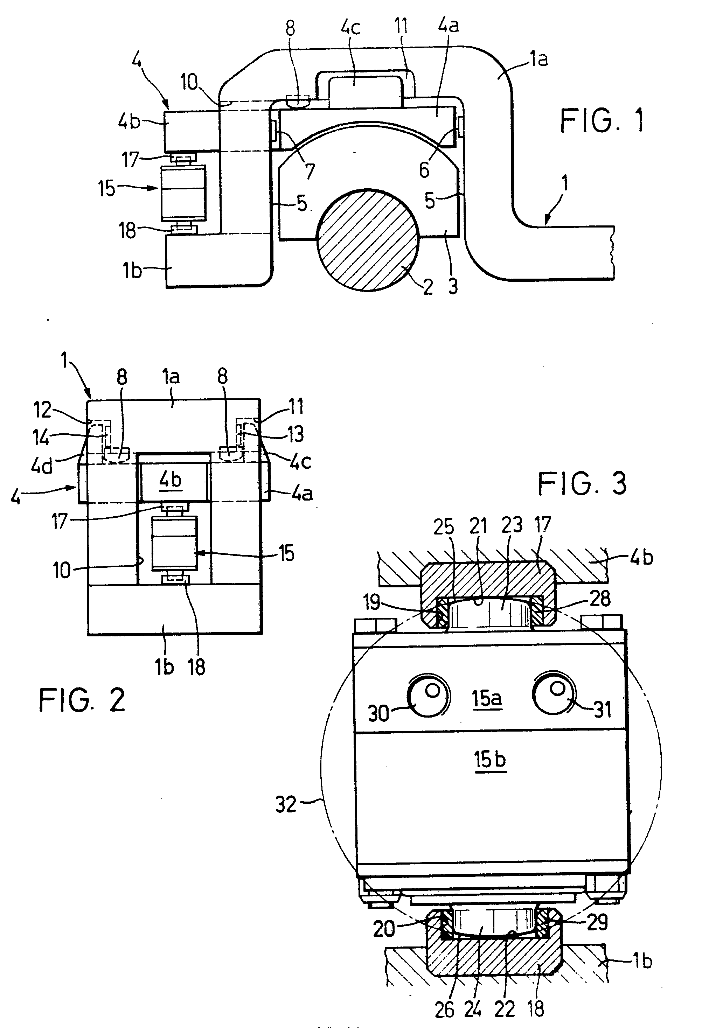

Gemäss Fig. 1 und 2 weist ein Fahrzeug, beispielsweise ein Schienenfahrzeug, ein Drehgestell 1 auf, auf welchem in an sich bekannter Weise ein nicht dargestellter Fahrzeugkasten angebracht ist. Das Drehgestell 1 ist mit zwei bügelförmigen Teilen 1a versehen, in deren Bereich Radachsen 2 angeordnet sind. Einfachheitshalber wird in Fig. 1 nur die Anordnung zu einer Radachsenseite dargestellt und beschrieben; zu der anderen Radachsenseite ist eine zweite Anordnung spiegelbildlich ausgebildet. Die Radachse 2 ist in nicht näher dargestellter Weise in einer Achsbuchse 3 drehbar gelagert. Auf der Achsbuchse 3 liegt zum Beispiel über nicht abgebildete Gleitsteine ein Wiegebalken 4 auf. Ein Teil 4a des Wiegebalkens 4 ragt durch den bügelförmigen Teil 1a des Drehgestelles 1 hindurch. An inneren Wänden 5 des bügelförmigen Teiles 1a sind Begrenzungsflächen 6, 7 angebracht. Zwischen dem Teil 4a des Wiegebalkens 4 und den Begrenzungsflächen 6, 7 ist in der Längsrichtung des Drehgestelles 1 ein Spiel vorhanden. Der Wiegebalken 4 stützt sich gemäss Fig. 1 und 2 auf zwei im Drehgestell 1 befestigten Kalotten 8 ab.

Wie aus Fig. 2 ersichtlich ist, weist der bügelförmige Teil 1a des Drehgestelles 1 in der Querrichtung eine Ausnehmung 10 auf. Ein Teil 4b des Wiegebalkens 4 ragt mit Spiel durch die Ausnehmung 10 aus dem bügelförmigen Teil 1a hinaus. Im Drehgestell 1 sind ferner Vertiefungen 11, 12 mit Begrenzungsflächen 13, 14 vorhanden. Der Teil 4a des Wiegebalkens ist mit zwei Ansätzen 4c, 4d versehen. Zwischen den Ansätzen 4c, 4d des Wiegebalkens 4 und den Begrenzungsflächen 13, 14 ist in der Querrichtung des Drehgestelles 1 ein Spiel vorhanden.

Zwischen dem aus dem bügelförmigen Teil 1a des Drehgestelles 1 hinausragenden Teil 4b des Wiegebalkens 4 und einem Fussteil 1b des Drehgestelles 1 ist ein Wiegeventil 15 abgestützt. Der prinzipielle Aufbau der Wiegeventile zur Steuerung der einer Bremseinrichtung in Abhängigkeit der Fahrzeugbelastung zuführbaren Druckluft ist an sich bekannt und wird daher weiter nicht näher dargestellt oder beschrieben.

Vorzugsweise ist der Teil 4b des Wiegebalkens 4 sowie der Fussteil 1b des Drehgestelles mit Stützkörpern 17, 18 versehen, deren Ausbildung der Fig. 3 zu entnehmen ist. Die Stützkörper 17, 18 weisen Sackbohrungen 19, 20 mit ebenen Grundflächen 21, 22 auf. Das Wiegeventil 15 bzw. seine relativ zueinander beweglichen Teile 15a, 15b besitzen je einen Ansatz 23, 24. Jeder Ansatz 23 bzw. 24 ist mit einer kugelförmigen Stützfläche 25 bzw. 26 versehen. Der Radius der beiden Stützflächen 25, 26 ist vorzugsweise so gewählt, dass in einem Gleichgewichtszustand des Wiegeventils 15 (d.h. in der Abschlusstellung des im Wiegeventil 15 vorhandenen, aus der Zeichnung nicht ersichtlichen pneumatischen Ventils, über welches die der Bremseinrichtung zuführbare Druckluft gesteuert wird), das Zentrum der beiden kugelförmigen Stützflächen 25, 26 zusammenfällt. Die beiden Stützflächen bilden dann einen Teil eines virtuellen Kugelmantels 32 (Fig. 3).

Die Ansätze 23, 24 ragen in die Sackbohrungen 19, 20 hinein, wobei sich die kugelförmigen Stützflächen 25, 26 an den ebenen Grundflächen 21, 22 abstützen. Zwischen den Ansätzen 23, 24 und den Stützkörpern 17, 18 sind ferner in den Sackbohrungen 19, 20 elastische Zentrierringe 28, 29, beispielsweise aus Gummi angebracht.

Das Wiegeventil 15 besitzt nach Fig. 3 zwei Öffnungen 30, 31. Über die eine wird dem Wiegeventil 15 die Druckluft vom Hilfsluftbehälter zugeführt, über die andere wird die Steuerdruckluft vom Wiegeventil 15 der nicht dargestellten Bremseinrichtung weggeführt.

Aus dem beschriebenen Aufbau ergibt sich folgende Wirkungsweise:

Während der Fahrt des unter einer bestimmten Last stehenden Fahrzeuges kann der zum Fahrgestell gehörende Wiegebalken 4 gegenüber dem mit dem Fahrzeugkasten verbundenen Drehgestell 1 sowohl in der Längsrichtung des Drehgestelles 1, als auch in der Querrichtung mit Spiel bewegt werden. Mit anderen Worten kann der Wiegebalken 4 in der horizontalen Ebene in allen Richtungen kleine Bewegungen gegenüber dem Drehgestell 1 ausführen. Wäre nun jetzt das Wiegeventil 15, wie bis jetzt üblich, an einem der beiden Teile 4, 1 befestigt, so würden zwangsweise durch die Querbewegungen des Wiegebalkens 4 Gleitreibungskräfte an der Abstützfläche des Wiegeventils auftreten. Dadurch, dass das Wiegeventil 15 nun aber erfindungsgemäss sowohl am Wiegebalken 4, als auch am Drehgestell 1 jeweils über die kugelförmige Stützfläche 25 bzw. 26 abgestützt ist, findet an den Abstützpunkten lediglich eine Rollreibung statt. Das ganze Wiegeventil 15 kann das seitliche Spiel der beiden Fahrzeugteile 1, 4 mitmachen und durch die Querkräfte leicht aus seiner vertikalen Lage ausgekippt werden, indem die beiden Stützflächen 25, 26 an den ebenen Grundflächen 21, 22 abrollen können. Dadurch, dass die beiden Stützflächen 25, 26 in der Abschlusstellung des Wiegeventils 15 ein gemeinsames Zentrum haben und einen Teil eines virtuellen Kugelmantels 32 bilden, wird dafür gesorgt, dass das Abrollen der Stützfläche 25,26 keine unerwünschte Abstandsänderung der Teile 15a, 15b und somit ein unerwünschtes Betätigen oder eine Funktionsstörung des Wiegeventils 15 zur Folge hat.

Selbstverständlich ist der erfindungsgemässe Einbau des Wiegeventils nicht nur auf die Anwendung nach dem beschriebenen Ausführungsbeispiel beschränkt. Das Wiegeventil könnte in dieser Art und Weise auch zwischen einer Fahrzeugfeder und dem Fahrzeugkasten oder zwischen einem Drehgestell und dem Fahrzeugkasten usw. eingebaut werden. Auch die dargestellten Stützkörper 17, 18 sowie die Zentrierringe 28, 29 sind im Prinzip entbehrlich und sollen bloss die Stabilität des Systems verbessern. Sie könnten allerdings auch durch andere Führungselemente ersetzt werden.

## Patentansprüche

1. Vorrichtung zur Steuerung einer Druckluftbremse in Abhängigkeit der Fahrzeugbelastung an einem Fahrzeug, mit einem zwischen zwei Fahrzeugteilen, nämlich einem Fahrzeugkasten und einem Fahrgestell angeordneten Wiegeventil (15), das über eine erste kugelförmige Stützfläche (25 bzw. 26) an einem der beiden Fahrzeugteile abgestützt ist, dadurch gekennzeichnet, dass das Wiegeventil (15) mit einer zweiten kugelförmigen Stützfläche (26 bzw. 25) an dem anderen Fahrzeugteil abgestützt ist, dass der Radius der ersten und der zweiten Stützfläche (25 bzw. 26) gleich gross ist und dass die Zentren der ersten und der zweiten Stützfläche (25, 26) in der Abschlusstellung des Wiegeventils zusammenfallen.

2. Vorrichtung nach Anspruch 1, dadurch gekennzeichnet, dass die erste und die zweite Stützfläche (25, 26) jeweils an einem Ansatz (23, 24) des Wiegeventils (15) angeordnet ist, wobei das Wiegeventil (15) mit den Ansätzen (23, 24) in den Stützkörper (17, 18) hineinragt, von denen der eine auf dem einen und der andere auf dem anderen Fahrzeugteil befestigt ist.

## Claims

1. Device for controlling a compressed air brake on a vehicle, in proportion to the loading of the vehicle, this device possessing a weight-sensing valve (15), located between two vehicle parts, namely a vehicle body and a vehicle chassis, the said valve being supported, via a first spherical supporting-surface (25 or 26), on one of the two vehicle parts, characterised in that the weight-sensing valve (15) is supported, by means of a second spherical supporting-surface (25 or 26), on the other vehicle part, that the radius of the first and of the second supporting-surface (25 or 26) is of the same magnitude, and that the centres of the first and of the second supporting-surface (25, 26) coincide when the weight-sensing valve is in the shut-off position.

2. Device according to Claim 1, characterised in that the first and the second supporting-surfaces (25, 26) are located, in each case, at a projecting piece (23, 24) of the weight sensing valve (15), the projecting pieces (23, 24) of the weight-sensing valve (15) projecting into the supporting-body (17,18), of which one body is attached to one vehicle part, and the other body is attached to the other vehicle part.

## Revendications

1. Dispositif de commande d'un frein à air comprimé en fonction de la charge du véhicule sur un véhicule, avec une vanne à bascule (15) prévue entre deux parties de véhicule à savoir un caisson de véhicule et un châssis de véhicule, cette vanne s'appuyant par une première surface d'appui spérique (25, 26) sur l'une des deux parties de véhicule, caractérisé en ce que la vanne à bascule (15) s'appuie sur l'autre partie de véhicule par une seconde surface d'appui sphérique (25, 26), le rayon de la première et de la seconde surface d'appui (25, 26) étant égal et le centre de la première surface d'appui et celui de la seconde (25, 26) coïncidant lorsque la vanne est en position de fermeture.

2. Dispositif selon la revendication 1, caractérisé en ce que la première et la seconde surface d'appui (25, 26) sont respectivement prévues sur un épaulement (23, 24) de la vanne à bascule (15), la vanne (15) pénétrant dans le corps d'appui (17, 18) par les épaulements (23, 24), l'un des corps d'appui étant fixé sur une partie de véhicule et l'autre sur l'autre partie du véhicule.

FIG. 1

FIG. 2

FIG. 3